# EUROPEAN PATENT SPECIFICATION

(11) **EP 2 122 184 B1**
(45) Date of publication and mention of the grant of the patent: **25.04.2012**
(21) Application number: 08718550.0
(22) Date of filing: 28.02.2008
(51) Int. Cl.: F15B 1/02, F16L 55/04, F01L 13/00

(54) **ATTENUATOR FOR DAMPING PRESSURE FLUCTUATIONS IN A HYDRAULIC SYSTEM**
DÄMPFER ZUR REDUZIERUNG VON DRUCKFLUKTUATIONEN IN EINEM HYDRAULISCHEN SYSTEM
ATTÉNUATEUR POUR AMORTIR DES FLUCTUATIONS DE PRESSION DANS UN SYSTÈME HYDRAULIQUE

(30) Priority: 09.03.2007 FI 20075165
(43) Date of publication of application: 25.11.2009
(73) Proprietor: Wärtsilä Finland Oy, 65380 Vaasa (FI)
(72) Inventor: SUNDSTEN, Magnus, FI- 65610 Korsholm (FI)
(74) Representative: Nissinen, Jyrki Antero
(86) International application number: PCT/FI2008/050097
(87) International publication number: WO 2008/110662

(56) References cited:
- WO-A-94/18488
- DE-A1- 3 146 298
- FR-A- 2 333 191
- GB-A- 2 203 820
- US-A- 5 331 866
- US-A1- 2004 112 445
- US-B1- 6 557 518
- US-B1- 6 591 796

## Description

The present invention relates to a hydraulic system comprising a guide for a gas exchange value of a piston engine cylinder.

E.g. piston engines are provided with hydraulic systems and components, where the need for hydraulic fluid varies strongly as a function of time. For instance in a control system for inlet valves equipped with alternating timing the timing of the valve is changed by regulating the flow rate of the hydraulic fluid going to the control system. The volume flow rate of the hydraulic fluid required by the control system varies in a pulsive manner and the flow changes occur rapidly and at a high frequency. This has a tendency to bring about detrimental over- and underpressure pulses and even cavitation in the hydraulic system.
US 2004/0112445 discloses a switchable fluid control valve assembly having a regulating spoot and a pilot spool disposed within a common bore. A regulating spring urges the regulating spool toward a rest position wherein an oil supply port is fully uncovered. Supply oil entering the assembly causes the regulating spool to assume a position wherein oil flow is throttled to a dowstream pressure insufficient to activate an associated valve deactivation mechanism but sufficient to provide lubrication to the engine. When activation of the mechanism is desired, a solenoid moves the pilot spool wherein oil at full pressure is engaged against the regulating spool, de-throttling the flow of oil to the mechanism.: When the solenoid is again deactivated, a dump port is opened into the oil flow path. immediately reducing the pressure on the regulating spool which then moves to eclipse: the supply port and open a path from the mechanism to drain.

An object of the present invention is to provide a hydraulic system in which pressure fluctuations can be equalized.

The objects according to the invention are achieved as disclosed in the appended claim 1.
A hydraulic system according to the invention comprises a guide for a gas exchange valve of a piston engine cylinder, in which guide the need for hydraulic fluid varies as a function of time, and a feed opening for supplying hydraulic fluid to the guide, an attenuator for damping pressure: fluctuations in a hydraulic system, which attenuator comprises a body with a chamber, in which a movable piston loaded by a spring is arranged, a fluid space inside the chamber, which space is delimited by the piston surface of the piston, an inlet conduit for feeding hydraulic fluid into the fluid space and an outlet conduit for discharging hydraulic fluid from the fluid space, the flow resistance of the inlet conduit being higher than the flow resistance of the outlet conduit, the outlet conduit of which attenuator is in flow connection with the feed opening and the inlet conduit with a source of hydraulic fluid. When the pressure of the hydraulic fluid in the fluid space drops below a certain limit, the spring is arranged to move the piston to a position, in which the flow connection between the inlet conduit and the outlet conduit is closed.

Considerable advantages are achieved by the present invention.

The attenuator equalizes efficiently pressure fluctuations occurring in a hydraulic system and dampens over- and underpressure pulses, which improves the operation of the system and reduces cavitation appearing in the system. In addition, the cross-sectional flow area of the inlet conduit leading to the attenuator may be smaller than normally, since the attenuator stores hydraulic fluid, which is utilized when the need for hydraulic fluid varies rapidly. Without an attenuator the inlet conduit must be dimensioned on the basis of the maximum flow of the system. Further, the attenuator according to the invention may be used in a plurality of various hydraulic circuits, in which the need for hydraulic fluid varies as a function of time.

In one embodiment of the invention the piston closes the flow connection between the inlet and outlet conduits opening to the fluid space of the attenuator in situations, in which the pressure of the hydraulic fluid in the fluid space drops below a certain limit value. Thus, hydraulic fluid remains in the hydraulic system on the side of the outlet conduit, for instance to be used by the component therein.

In the following, the invention is explained in more detail, by way of example, with reference to the appended drawings.
Figure 1 shows schematically a piston engine and its valve mechanism, to the feed channel of the hydraulic guide of which an attenuator according to the invention is coupled.
Figure 2 shows a cross-sectional view of the attenuator according to Figure 1 in an operational mode, in which no hydraulic fluid is supplied to the guide of the valve mechanism.
Figure 3 shows a cross-sectional view of the attenuator according to Figure 1 in an operational mode, in which hydraulic fluid is supplied to the guide of the valve mechanism.
Figure 4 shows a cross-sectional view of the attenuator according to Figure 1 in an operational mode, in which the attenuator breaks the flow connection between the guide of the valve mechanism and the rest of the hydraulic system in a situation, in which the pressure in the hydraulic system is dropping.

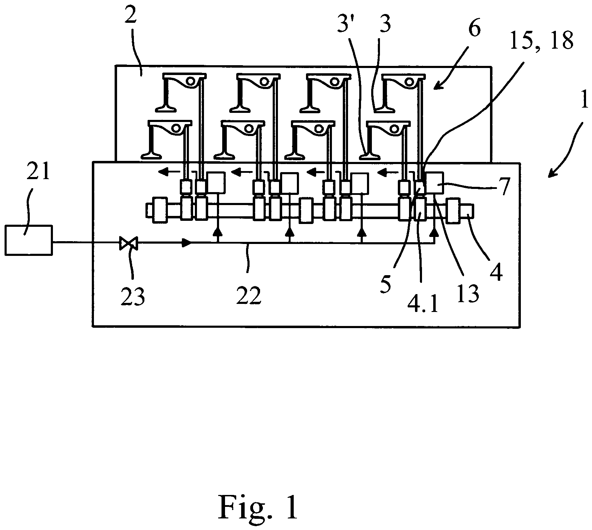

Figure 1 shows schematically a piston engine 1, the gas exchange of the cylinders (not shown) of which is guided by inlet and exhaust valves 3, 3' located on a cylinder block 2. The valves 3 are operated via a valve mechanism 6 typically receiving their operating force from the engine's camshaft 4 under the guidance of cam profiles 4.1. The force transmission connection between each valve mechanism 6 is practised via a hydraulic control system or a guide 5.

By means of the guide 5 the timing of the valves 3, 3', i.e. the opening and closing moments during the work cycle of the cylinder, may be changed as required. The guide 5 may be embodied in a number of different ways. In one embodiment the guide 5 comprises a space for hydraulic fluid, which space is connected via a feed channel 18 to the hydraulic system. The space encloses a piston, which is in force transmission connection with the cam of the engine's camshaft and the valve mechanism. By changing the flow of the hydraulic fluid through the space the timing of the valve may be changed as required. During the opening phase of the valve the flowing of hydraulic fluid or other pressure fluid used in the hydraulic system into the space is allowed and during the closing phase of the valve the flowing of hydraulic fluid out of the space is throttled, whereby the closing of the valve 3 is slowed down. In the embodiment of figure 1 the hydraulic system is the pressure lubrication system of the piston engine and the lubricating oil of the pressure lubrication system is used as a hydraulic fluid. The lubricating oil to be discharged from the guide 5 is led e.g. to the oil sump of the engine. Preferably, the opening and closing moments of the inlet valve 3 are changed by the guide 5.

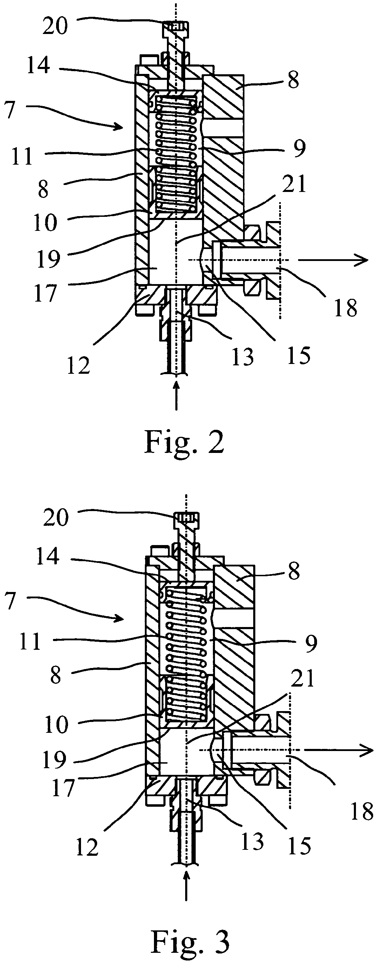

The flow of the hydraulic fluid in the feed channel, which leads to the guide 5, varies strongly during the work cycle of the engine, which causes under- and overpressure pulses in the hydraulic system. In order to equalise the pressure pulses an attenuator 7 according to the invention is arranged in conjunction with a feed channel 22 leading to the guide 5. The feed channel 22 is provided with a valve 23, by which the flow of hydraulic fluid from the source of hydraulic fluid to the attenuator 7 and guide 5 may be allowed or blocked, as desired. Thus, the guide 5 may, if so required, be removed from service for instance in situations, in which the timing of the valve needs not to changed. All hydraulic fluid going to the guide 5 is led through the attenuator 7. The structure and operation of the attenuator 7 is shown in more detail in Figs. 2 - 4.

The attenuator 7 comprises a body 8 with a chamber 9. One end 12 of the chamber 9 is provided with an inlet conduit 13 opening to the chamber, through which conduit hydraulic fluid is led into a fluid space 17 provided in the chamber. The inlet conduit 13 is in flow connection with a source of hydraulic fluid, such as the pressure lubrication system 21 of the engine 1. By the side of the chamber 9, near to its end 12, there is provided an outlet conduit 15, through which hydraulic fluid is led out of the fluid space 17. The outlet conduit 15 is in flow connection with a feed opening 18 leading to the guide 5. All hydraulic fluid flowing to the guide 5 via the feed opening 18 passes through the attenuator 7. The cross-sectional flow area of the outlet conduit 15 is larger than that of the inlet conduit 13. The cross-sectional flow area of the outlet conduit 15 is 3 - 10 times larger than that of the inlet conduit 13, preferably 5 - 10 times larger than the cross-section flow area of the inlet conduit 13. Thus, the flow resistance in the inlet conduit 13 is higher than the flow resistance in the outlet conduit 15. The chamber 9 encloses a piston 10, which is supported to the second end 14 of the chamber via a spring 11. The spring 11 and the fluid space 17 are located on opposite sides of the piston 10. The piston 10 is movable within the chamber 9 in the direction of its longitudinal axis 21. The force exerted on the piston 10 by the hydraulic fluid in the fluid space 17 is opposite in direction with respect to the force exerted on the piston 10 by the spring 11.

The piston 10 is arranged in the chamber 9 with a relatively tight fit, whereby no hydraulic fluid is able to escape past the piston to the space between the piston 10 and the second end 14. The piston surface 19 of the piston 9 delimits the fluid space 17. The second end 14 of the chamber 9 is movable in the direction of the longitudinal axis 21 of the chamber by means of an adjusting screw 20 or another actuating mechanism. By changing the position of the second end 14 the movement of the piston 10 may be adjusted so that it is compatible with the pressure prevailing in the hydraulic system and other properties thereof. The spring 11 is of helical spring type. The diameters of the spring threads in the vicinity of the second end 14 may be of different sizes so that the spring threads go within each other, when the spring is compressed to a sufficient degree. This dampens the movement of the spring 11 while being compressed and thus prevents spring bottoming.

In the operational mode according to figure 2 the guide 5 does not need more hydraulic oil, whereby no hydraulic fluid flows from the fluid space 17 to the feed channel 18 via the outlet conduit 15. Due to the force caused by the pressure prevailing in the fluid space 17 the piston 10 has moved to its retracted position against the pressure of the spring 11. The volume of the fluid space 17 is at its largest. The pressure prevailing in the chamber 9 is as high as the pressure in the hydraulic system on inlet conduit's 13 side.

In the operational mode according to figure 3 hydraulic fluid flows from the fluid space 17 via the outlet conduit 15 to the feed channel or feed opening 18 and further to the guide 5. The volume flow rate of the hydraulic fluid discharged via the outlet conduit 15 is higher than that of the hydraulic fluid via the inlet conduit 13 to the fluid space 17, since the flow resistance of the inlet conduit 13 is higher than that of the outlet conduit 15. Consequently, the pressure in the fluid space 17 drops and the spring force of the spring 11 pushes the piston 10 in the chamber 9 towards the end 12 of the chamber, i.e. to the direction, in which the volume of the fluid space 17 reduces. As the flow of the hydraulic fluid via the outlet conduit 15 to the guide 5 ceases, the movement of the piston 10 stops. The pressure of the hydraulic fluid in the fluid space 17 rises and hydraulic fluid flows via the inlet conduit 13 to the fluid space 17. At the same time, due to the force caused by the pressure prevailing in the fluid space 17, the piston 10 starts to move back toward the second end and the position according to figure 2. Accordingly, the volume of the fluid space 17 increases. When hydraulic fluid starts to flow again via the outlet conduit 15 to the guide 5, the piston 10 moves in the chamber 9 from the position according to figure 2 toward the position according to figure 3.

The movement of the piston in the chamber 9 changes the volume of the fluid space 17, which in turn dampens the pressure pulses directed onto the hydraulic system on the side of the inlet conduit 13, as the flow rate of the hydraulic fluid via the outlet conduit 15 to the guide 5 varies. The dimensions and properties of the attenuator 7, e.g. the volume of the chamber 9 and the spring force of the spring 11, are dimensioned so that in the normal operational conditions of the engine 1 the piston 10 does not cover the outlet conduit 15 on side of the chamber.

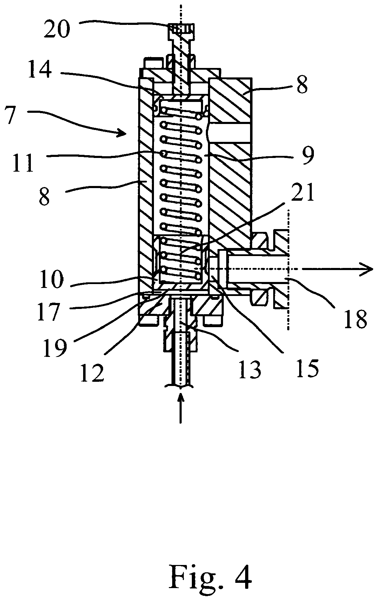

In the operational mode according to Figure 4 the pressure of hydraulic fluid in the section of the hydraulic system on the side of the inlet conduit 13 is lower than the normal level, such being the case for instance when the engine is stopped or in leak situations. Then the spring 11 presses the piston 10 close to the end 12 of the chamber 9, whereby the piston 10 closes the flow connection between the outlet conduit 15 and the inlet conduit 13. Hence, the attenuator 7 prevents the discharge of hydraulic fluid from the section of the hydraulic system on the side of the outlet conduit 15, whereby hydraulic fluid remains in the guide 5 or in another hydraulic component on the outlet conduit's 15 side of the hydraulic system.

The attenuator according to the invention may also be used in hydraulic systems in conjunction with other kinds of applications or hydraulic components in order to equalise pressure fluctuations in situations, where the need for hydraulic fluid in the application or hydraulic component varies as a function of time. Preferably, the attenuator 7 is placed as close to the hydraulic component as possible or in connection with the hydraulic component. The attenuator 7 may be e.g. integral with the hydraulic component, whereby the parts of the attenuator 7 may be located by the side of or inside the hydraulic component. The integrated attenuator and the hydraulic component may be manufactured for instance by casting. In this case the fluid space 17 of the attenuator 7 acting as a store for hydraulic fluid is near the place of use and therefore, the operation of the attenuator 7 is fast. In addition, the inlet conduit 13 in the vicinity of the hydraulic component 5 dampens efficiently the pressure fluctuations directed onto the hydraulic system.

## Claims

1. A hydraulic system comprising a guide (5) for a gas exchange valve (3) of a piston engine cylinder, the need for hydraulic fluid in which varies as a function of time, and a feed opening (18) for supplying hydraulic fluid to the guide (5), an attenuator (7) for damping pressure fluctuations in a hydraulic system, which attenuator comprises a body (8) with a chamber (9), in which a movable piston (10) loaded by a spring (11) is arranged, a fluid space (17) inside the chamber (9), which space is delimited by the piston surface (19) of the piston (10), an inlet conduit (13) for feeding hydraulic fluid into the fluid space (17) and an outlet conduit (15) for discharging hydraulic fluid from the fluid space (17), the flow resistance of the inlet conduit (13) being higher than the flow resistance of the outlet conduit (15), the outlet conduit (15) of which attenuator (7) is in flow connection with the feed opening (18) and the inlet conduit (13) with a source (21) of hydraulic fluid, **characterised in that** when the pressure of the hydraulic fluid in the fluid space drops below a certain limit, the spring (11) is arranged to move the piston (10) to a position, in which the flow connection between the inlet conduit (13) and the outlet conduit (15) is closed.

2. The hydraulic system according to claim 1, **characterised in that** the cross-sectional flow area of the outlet conduit (15) is larger than the cross-sectional flow area of the inlet conduit (13).

3. The hydraulic system according to claim 2, **characterised in that** the cross-sectional flow area of the outlet conduit (15) is 3 - 10 times larger than the cross-sectional flow area of the inlet conduit (13).

4. The hydraulic system according to claim 1. **characterised in that** the source of hydraulic fluid is the pressure lubrication system of the piston engine (1) and the hydraulic fluid is lubricating oil.

5. The hydraulic system according anyone of the preceding claims, **characterised in that** the attenuator (7) is arranged in conjunction with the hydraulic component (5) or integrated therewith.

## Patentansprüche

1. Hydrauliksystem, das eine Führung (5) für ein Ladungswechselventil (3) eines Kolbenmotor-Zylinders, in dem sich der Bedarf an Hydraulikfluid in Abhängigkeit von der Zeit verändert, und eine Speiseöffnung (18) zum Zuführen von Hydraulikfluid zu der Führung (5), einen Dämpfer (7) zum Dämpfen von Druckschwankungen in einem Hydrauliksystem umfasst, wobei der Dämpfer einen Korpus (8) mit einer Kammer (9), in der ein durch eine Feder (11) gespannter beweglicher Kolben (10) angeordnet ist, einen Fluidraum (17) innerhalb der Kammer (9), wobei der Raum durch die Kolbenfläche (19) des Kolbens (10) begrenzt wird, eine Einlassleitung (13) zum Einspeisen von Hydraulikfluid in den Fluidraum (17) und eine Auslassleitung (15) zum Ablassen von Hydraulikfluid aus dem Fluidraum (17) umfasst, wobei der Durchflusswiderstand der Einlassleitung (13) höher ist als der Durchflusswiderstand der Auslassleitung (15), wobei die Auslassleitung (15) des Dämpfers (7) in Durchflussverbindung mit der Speiseöffnung (18) und die Einlassleitung (13) mit einer Quelle (21) von Hydraulikfluid steht, **dadurch gekennzeichnet, dass**, die Feder (11) dafür angeordnet ist, den Kolben (10), wenn der Druck des Hydraulikfluids in dem Fluidraum unter eine bestimmte Grenze fällt, zu einer Stellung zu bewegen, in der die Durchflussverbindung zwischen der Einlassleitung (13) und der Auslassleitung (15) geschlossen ist.

2. Hydrauliksystem nach Anspruch 1, **dadurch gekennzeichnet, dass** die Durchfluss-Querschnittsfläche der Auslassleitung (15) größer als die Durchfluss-Querschnittsfläche der Einlassleitung (13) ist.

3. Hydrauliksystem nach Anspruch 2, **dadurch gekennzeichnet, dass** die Durchfluss-Querschnittsfläche der Auslassleitung (15) 3- bis 10-mal größer als die Durchfluss-Querschnittsfläche der Einlassleitung (13) ist.

4. Hydrauliksystem nach Anspruch 1, **dadurch gekennzeichnet, dass** die Quelle von Hydraulikfluid das Druckschmierungssystem des Kolbenmotors (1) ist und das Hydraulikfluid Schmieröl ist.

5. Hydrauliksystem nach einem der vorhergehenden Ansprüche, **dadurch gekennzeichnet, dass** der Dämpfer (7) in Verbindung mit der Hydraulikkomponente (5) angeordnet oder mit derselben integriert ist.

## Revendications

1. Système hydraulique comprenant un guide (5) pour une soupape d'échange de gaz (3) d'un cylindre de moteur à piston, dans lequel le besoin en fluide hydraulique varie en fonction de la durée, et une ouverture d'alimentation (18) pour fournir du fluide hydraulique au guide (5), un atténuateur (7) pour atténuer des fluctuations de pression dans un système hydraulique, lequel atténuateur comprend un corps (8) avec une chambre (9) dans laquelle un piston mobile (10) contraint par un ressort (11) est agencé, un espace fluidique (17) à l'intérieur de la chambre (9), lequel espace est délimité par la surface de piston (19) du piston (10), un conduit d'entrée (13) pour alimenter le fluide hydraulique depuis l'espace fluidique (17) et un conduit de sortie (15) pour décharger le fluide hydraulique de l'espace fluidique (17), la résistance à l'écoulement du conduit d'entrée (13) étant supérieure à la résistance à l'écoulement du conduit de sortie (15), le conduit de sortie (15) duquel atténuateur (7) est en connexion fluidique avec l'ouverture d'alimentation (18) et le conduit d'entrée (13) avec une source (21) de fluide hydraulique, **caractérisé en ce que** lorsque la pression du fluide hydraulique dans l'espace fluidique chute en-dessous d'une certaine limite, le ressort (11) est agencé pour déplacer le piston (10) dans une position dans laquelle la connexion fluidique entre le conduit d'entrée (13) et le conduit de sortie (15) est fermée.

2. Système hydraulique selon la revendication 1, **caractérisé en ce que** la zone d'écoulement de section transversale du conduit de sortie (15) est plus large que la zone d'écoulement de section transversale du conduit d'entrée (13).

3. Système hydraulique selon la revendication 2, **caractérisé en ce que** la zone d'écoulement de section transversale du conduit de sortie (15) est 3 à 10 fois plus large que la zone d'écoulement de section transversale du conduit d'entrée (13).

4. Système hydraulique selon la revendication 1, **caractérisé en ce que** la source de fluide hydraulique est le système de lubrification sous pression du moteur à piston (1) et que le fluide hydraulique et de l'huile de lubrification.

5. Système hydraulique selon l'une quelconque des revendications précédentes, **caractérisé en ce que** l'atténuateur (7) est agencé en liaison avec le composant hydraulique (5) ou intégré avec celui-ci.
